# FASCICULE DE BREVET EUROPEEN

(11) **EP 1 315 550 B1**
(45) Date de publication et mention de la délivrance du brevet: **15.09.2010**
(21) Numéro de dépôt: 01951780.4
(22) Date de dépôt: 09.07.2001
(51) Int. Cl.: B01D 53/94, B01J 23/46

(54) **PROCEDE DE TRAITEMENT CATALYTIQUE D'UN GAZ POUR LA REDUCTION DE L'EMISSION DES OXYDES D'AZOTE**
VERFAHREN ZUR KATALYTISCHEN BEHANDLUNG VON GASEN ZUR REDUKTION VON STICKOXID-EMISSIONEN
METHOD FOR CATALYTIC TREATMENT OF A GAS FOR REDUCING NITROGEN OXIDE EMISSION

(30) Priorité: 24.07.2000 FR 0009678
(43) Date de publication de la demande: 04.06.2003
(73) Titulaire: UNIVERSITE PIERRE ET MARIE CURIE (PARIS VI), 75252 Paris Cédex 05 (FR)
(72) Inventeur: DJEGA-MARIADASSOU, Gérald, F-91430 Igny (FR); THOMAS, Cyril, F-75013 Paris (FR); GORCE, Olivier, F-78400 Chatou (FR)
(74) Mandataire: Sueur, Yvette
(86) Numéro de dépôt international: PCT/FR2001/002201
(87) Numéro de publication internationale: WO 2002/007864

(56) Documents cités:
- EP-A- 0 337 809
- EP-A- 0 427 493
- EP-A- 0 637 461
- US-A- 4 587 231
- US-A- 5 968 463

## Description

La présente invention concerne un procédé de traitement d'un gaz pour la réduction de l'émission des oxydes d'azote avec un catalyseur à base de rhodium avec du palladium et/ou du platine.

On sait que la réduction des émissions des oxydes d'azote (NOx) des gaz d'échappement des moteurs d'automobiles notamment est effectuée à l'aide de catalyseurs "trois voies" qui utilisent stoechiométriquement les gaz réducteurs présents dans le mélange. Tout excès d'oxygène se traduit par une détérioration brutale des performances du catalyseur.

Or, certains moteurs comme les moteurs diesel ou les moteurs essence fonctionnant en mélange pauvre (lean burn) sont économes en carburant mais émettent des gaz d'échappement qui contiennent en permanence un large excès d'oxygène, d'au moins 5% par exemple. Un catalyseur trois voies standard est donc sans effet significatif sur les émissions en NOx de ces moteurs. Par ailleurs, la limitation des émissions en NOx est rendue impérative par le durcissement des normes en post combustion automobile qui s'étendent maintenant à ce type de moteurs.

Il existe donc un besoin réel d'un catalyseur efficace pour la réduction des émissions des NOx pour ce type de moteurs et, plus généralement, pour le traitement de gaz contenant des NOx.

Les documents EP-A-0337809, US-A-4587231 et EP-A-0427493 décrivent des catalyseurs comprenant une phase active à base de rhodium et d'au moins un autre élément choisi parmi le palladium et le platine sur un support à base d'oxyde de cérium et de zirconium utilisable pour la réduction des oxydes d'azote.

L'objet de l'invention est donc de trouver un catalyseur qui puisse être utilisé pour le traitement de tels gaz.

Dans ce but, le procédé de l'invention pour le traitement d'un gaz à teneur élevée en oxygène en vue de la réduction de l'émission des oxydes d'azote, est un procédé utilisant une composition catalytique comprenant une phase active sur un support et il est caractérisé en ce que la phase active est à base de rhodium sous forme Rh^{x+} et d'au moins un autre élément choisi parmi le palladium et le platine et en ce que le support est à base d'oxyde de cérium et d'oxyde de zirconium.

D'autres caractéristiques, détails et avantages de l'invention apparaîtront encore plus complètement à la lecture de la description qui va suivre, ainsi que des divers exemples concrets mais non limitatifs destinés à l'illustrer.

Les compositions utilisées dans l'invention comprennent une phase active et un support. Le terme support doit être pris dans un sens large pour désigner, dans la composition, le ou les éléments majoritaires et/ou soit sans activité catalytique propre, soit présentant une activité catalytique non équivalente à celle de la phase active; et sur lequel ou sur lesquels sont déposés les autres éléments. Pour simplifier, on parlera dans la suite de la description de support et de phase active ou supportée mais on comprendra que l'on ne sortirait pas du cadre de la présente invention dans le cas où un élément décrit comme appartenant à la phase active ou supportée était présent dans le support, par exemple en y ayant été introduit lors de la préparation même du support.

La phase active est à base de rhodium et d'au moins un autre élément choisi parmi le palladium et le platine. Dans la suite de la description le terme "autre élément" s'appliquera par conséquent non seulement au cas du palladium seul ou du platine seul mais aussi à la combinaison de ces deux éléments, cette combinaison pouvant se faire dans des proportions quelconques.

Selon une variante particulière de l'invention, l'autre élément est le palladium.

Selon une des caractéristiques de l'invention, le rhodium est présent dans la composition catalytique sous forme Rh^{x+}. Au sens de la présente invention, on entend par Rh^{x+} les différentes formes possibles oxydées du rhodium et autres que le rhodium réduit au degré d'oxydation 0 et le fait que le rhodium est en insertion superficielle dans le réseau du support. On exclut dans cette définition le rhodium se présentant par exemple sous la forme Rh₂O₃. Selon un mode de réalisation avantageux de l'invention, le rhodium est essentiellement sous forme Rh^{x+}. On entend par là qu'au moins 90% du rhodium de la composition catalytique est présent sous cette forme et encore plus particulièrement au moins 95%. Selon un mode de réalisation préféré de l'invention, le rhodium est présent totalement (100%) sous la forme Rh^{x+}_{.}

La détermination de la quantité de rhodium sous forme Rh^{x+} peut se faire par une méthode mettant en oeuvre la chimisorption du monoxyde d'azote. Cette méthode comprend, dans une première étape, un prétraitement du catalyseur de la température ambiante à 500°C par le mélange réactionnel stoechiométrique CO-NO-O₂ ou par le mélange CO-O₂ en excès de CO ou encore par H₂. Quand la température de 500°C est atteinte, le réacteur est purgé sous He puis refroidi à la température ambiante. Dans une deuxième étape, on réalise l'adsorption de NO dilué dans l'hélium. Ainsi, l'échantillon est exposé à la température ambiante à un mélange de 0,2% en volume de NO dilué dans l'hélium (15L.h⁻¹) jusqu'à la stabilisation du signal NO. Le réacteur est ensuite purgé jusqu'à l'élimination totale de NO de l'enceinte réactionnelle. Enfin, la méthode comprend une troisième étape de thermodésorption du NO. Le catalyseur est chauffé sous flux CO-O₂ (1,5% en volume de CO, 0,65% en volume d'O₂ dans l'hélium 15L.h⁻¹) de 25°C à 500°C.

On obtient par cette méthode un profil de désorption et on détermine à partir de ce profil la quantité de NO qui désorbe sous le pic de désorption qui apparaît au moment du "light-off' (température correspondant à 50% de conversion de CO) de la réaction CO-O₂ vers 200°C; une stoechiométrie de titrage NO:Rh=2 est utilisée pour dénombrer les sites Rh^{x+}.

La détermination de la quantité de rhodium sous forme Rh(0) peut se faire par le test en hydrogénation du benzène à 50°C. Un tel test est décrit dans l'article "Benzene Hydrogenation as a Tool for Détermination of the Percentage of metal Exposed on Low Loaded Ceria Supported Rhodium Catalysts" de F. Fajardie et al. du Journal of Catalysis 163, 77-86 (1996).

Le mode de réalisation préféré mentionné plus haut dans lequel le rhodium est présent totalement (100%) sous la forme Rh^{x+} correspond au cas où la valeur de 100% est obtenue par la première méthode (titrage par chimisorption de NO) qui vient d'être décrite ci-dessus et la valeur de 0% de Rh(0) par la seconde méthode (hydrogénation du benzène) compte tenu de leur limite de précision.

Les proportions respectives du rhodium et de l'autre élément de la phase catalytique peuvent varier. De préférence cependant, le rapport atomique de l'autre élément au rhodium est d'au moins 1, plus particulièrement d'au moins 1,5 et encore plus particulièrement d'au moins 3.

Par ailleurs, l'autre élément est de préférence présent dans la composition catalytique sous forme oxyde, par exemple sous forme PdO dans le cas du palladium.

L'invention couvre le cas où la phase active consiste essentiellement en du rhodium et en un ou deux autres éléments platine et palladium. Par "consiste essentiellement" on entend que la phase active de la composition ne contient pas d'autre élément que le rhodium, le platine et le palladium comme par exemple un élément du type métal précieux ou autre métal de transition utilisé habituellement en catalyse et qui pourrait avoir une activité catalytique dans l'élimination des NOx.

Le support de la composition est à base d'oxyde de cérium et d'oxyde de zirconium. On pourra utiliser plus particulièrement les supports dans lesquels le rapport massique oxyde de cérium/oxyde de zirconium est compris entre 1/9 et 9/1. Préférentiellement, on utilise des supports dans lequel l'oxyde de cérium est majoritaire par exemple en une proportion d'oxyde de cérium d'au moins 60% par rapport à l'ensemble du support. Enfin, l'invention concerne le cas ou le support n'est constitué que par les seuls oxydes de cérium et de zirconium en mélange.

A titre d'exemple, on peut utiliser un support à base d'oxyde de cérium stabilisé par de l'oxyde de zirconium et tel que décrit dans la demande de brevet EP-A-207857.

On peut mentionner aussi les compositions à base d'oxyde de cérium et d'oxyde de zirconium décrites dans les demandes de brevets EP-A-605274, EP-A-735984 et WO 97/43214. On peut plus particulièrement utiliser les supports qui se présentent sous forme d'une solution solide. Dans ce cas, les diagrammes de diffraction X du support révèlent au sein de ce dernier l'existence d'une seule phase homogène. Pour les supports les plus riches en cérium, cette phase correspond en fait à celle d'un oxyde cérique CeO₂ cubique cristallisé et dont les paramètres de mailles varient par rapport à un oxyde cérique pur, traduisant ainsi l'incorporation du zirconium dans le réseau cristallin de l'oxyde de cérium, et donc l'obtention d'une solution solide vraie. On peut aussi utiliser les compositions à base d'oxyde de cérium et de zirconium dans lesquels ces oxydes sont présents dans une proportion atomique cérium/zirconium d'au moins 1.

L'invention s'applique aussi à l'utilisation de compositions catalytiques obtenues selon des procédés de préparation spécifique.

Le rhodium est déposé sur le support par échange anionique. Dans ce cas, on forme une suspension du support dans l'eau et on amène la suspension en dessous du point isoélectrique des oxydes support, généralement par addition d'acide. On ajoute ensuite à la suspension une solution d'un sel de rhodium par exemple un chlorure au même pH que celui de la suspension. On maintient sous agitation après l'ajout de la solution puis on filtre et on lave.

Le traitement thermique qui suit le dépôt se fait habituellement à une température comprise entre 100°C et 600°C, de préférence entre 300°C et 500°C. Le gaz réducteur peut être l'hydrogène pur ou le monoxyde de carbone pur ou un mélange de ceux-ci ou encore un de ces gaz ou les deux en mélange dans un gaz inerte.

A l'issue de ce traitement thermique, on dépose ensuite l'autre élément palladium ou platine sur le support, en utilisant une méthode de dépôt du type de celles décrites ci-dessus. Après ce dépôt, on effectue habituellement une calcination sous air de la composition à une température qui peut être comprise entre 200°C et 600°C, plus particulièrement entre 300°C et 500°C.

Les compositions obtenues par les procédés qui viennent d'être décrits sont généralement sous forme de poudres mais elles peuvent éventuellement être mises en forme pour se présenter sous forme de granulés, billes, extrudés, cylindres ou nids d'abeille de dimensions variables.

Les gaz susceptibles d'être traités par le procédé de la présente invention sont, par exemple, ceux issus de turbines à gaz, de chaudières de centrales thermiques à gaz ou à charbon ou encore de moteurs à combustion interne.

Les compositions de l'invention peuvent être utilisées plus particulièrement pour les gaz qui présentent une teneur élevée en oxygène. Par gaz présentant une teneur élevée en oxygène, on entend des gaz présentant un excès d'oxygène par rapport à la quantité nécessaire pour la combustion stoechiométrique des carburants et, plus précisément, des gaz présentant un excès d'oxygène par rapport à la valeur stoechiométrique λ = 1, c'est-à-dire les gaz pour lesquels la valeur de λ est supérieure à 1. La valeur λ est corrélée au rapport air/carburant d'une manière connue en soi notamment dans le domaine des moteurs à combustion interne. De tels gaz peuvent être ceux de moteur fonctionnant en mélange pauvre (lean burn) et qui présentent une teneur en oxygène (exprimée en volume) par exemple d'au moins 2% ainsi que ceux qui présentent une teneur en oxygène encore plus élevée, par exemple des gaz de moteurs du type diesel, c'est-à-dire d'au moins 5% ou de plus de 5%, plus particulièrement d'au moins 10%, cette teneur pouvant par exemple se situer entre 5% et 20%.

L'invention s'applique aussi aux gaz du type ci-dessus qui peuvent contenir en outre de l'eau dans une quantité de l'ordre de 1% à 15% en volume par exemple.

Les gaz peuvent contenir des hydrocarbures et, dans un tel cas, une des réactions que l'on cherche à catalyser est la réaction HC (hydrocarbures) + NOₓ.

Les hydrocarbures qui peuvent être utilisés comme agent réducteur pour l'élimination des NOx sont notamment les gaz ou les liquides des familles des carbures saturés, des carbures éthyléniques, des carbures acétyléniques, des carbures aromatiques et les hydrocarbures des coupes pétrolières comme par exemple le méthane, l'éthane, le propane, le butane, le pentane, l'hexane, l'éthylène, le butène, le propylène, l'acétylène, le butadiène, le benzène, le toluène, le xylène, le kérosène et le gazole.

Les gaz peuvent contenir aussi comme agent réducteur, des composés organiques contenant de l'oxygène. Ces composés peuvent être notamment les alcools du type par exemple alcools saturés comme le méthanol, l'éthanol ou le propanol; les éthers comme l'éther méthylique ou l'éther éthylique; les esters comme l'acétate de méthyle et les cétones.

L'invention concerne aussi un système pour le traitement de gaz en vue de la réduction des émissions des oxydes d'azote, gaz qui peuvent être du type de ceux mentionnés précédemment et tout particulièrement ceux présentant un excès d'oxygène par rapport à la valeur stoechiométrique. Ce système est caractérisé en ce qu'il comprend une composition telle que décrite plus haut. Ainsi, il peut comprendre un revêtement (wash coat) à propriétés catalytiques et à base de ces compositions, sur un substrat du type par exemple monolithe métallique ou en céramique.

Enfin, l'invention concerne aussi l'utilisation des compositions dans la fabrication d'un tel système.

Des exemples vont maintenant être donnés.

On utilise dans ces exemples des compositions dont le support est un mélange d'oxyde de cérium et d'oxyde de zirconium du type de celui de l'exemple 1 de la demande de brevet EP-A-906244, c'est à dire dans des proportions massiques respectives de 75% et de 25% ou atomiques de cérium et de zirconium de 62% et de 38%.

Préalablement à son utilisation, ce support a été calciné 2 heures à 500°C sous un flux gazeux O₂ (20%)-N₂ (80%) de 15NL/h.

Le mélange gazeux traité avec les compositions des exemples est le suivant :
NO : 340 ppm vol.
O₂ : 8% vol.
C₃H₆ : 1900 ppm vol.
N₂ : complément à 100% de volume
WH : variable suivant les exemples
H₂O : variable suivant les exemples

La quantité de catalyseur utilisée est de 200mg et le débit de gaz est de 15 NUh

### EXEMPLE 1

Sur 2,5g de support on dépose le rhodium par échange anionique de RhCl₃ à pH de 1,9. Après le dépôt du rhodium, on soumet la composition à un traitement thermique de 2 heures à 500°C sous 100cm³/min de H₂.

On dépose ensuite le palladium sur la composition ainsi traitée. La technique de dépôt utilisée est l'imprégnation par humidité naissante de PdCl₂ en solution aqueuse. On effectue enfin une calcination sous air à 500°C, 2 heures à un débit de 100 cm³/min.

### EXEMPLE 2

On procède comme dans l'exemple 1 mais au lieu du traitement thermique précité on soumet, après le dépôt du rhodium, la composition à une calcination de 2 heures à 500°C sous 100 cm³/min d'air industriel.

### EXEMPLE 3 (pas selon la revendication 1)

On procède comme dans l'exemple 1 mais le rhodium est déposé par imprégnation à humidité naissante par une solution aqueuse de RhCl₃.

### EXEMPLE 4 (pas selon la revendication 1)

On procède comme dans l'exemple 1 mais au lieu de palladium, on dépose du platine par imprégnation à humidité naissante par une solution aqueuse de H₂PtCl₆.

### EXEMPLES 5 ET 6

On procède comme dans l'exemple 1 mais on fait varier le rapport Pd/Rh.

### EXEMPLES 7 A 9

On procède comme dans l'exemple 1 mais avec un rapport Pd/Rh différent. Le catalyseur est utilisé dans des conditions différentes de WH et de teneur en eau.

### EXEMPLE 10

On procède comme dans l'exemple 1 mais le catalyseur obtenu est testé dans des conditions différentes de celles de cet exemple.

On donne dans le tableau ci-dessous les résultats obtenus en traitant le mélange gazeux mentionné plus haut avec les compositions obtenues selon les méthodes décrites dans les exemples.

Dans le tableau les abréviations ont les significations suivantes :
- M désigne le palladium ou le platine;
- % Rh et % M désigne les pourcentages massiques de Rh et M par rapport à l'ensemble de la composition, ces teneurs ayant été déterminées après calcination à 500°C;
- le rapport M/Rh est un rapport atomique;
- PME désigne le pourcentage de métal Rh réduit exposé (à l'état d'oxydation 0) déterminé par le test en hydrogénation du benzène à 50°C.

La conversion a été déterminée en isotherme à la température indiquée au temps t = 6 heures.

| Exemple | % Rh | % M | Rapport M/Rh | PME (%) | H₂O (% vol) | WH (h⁻¹) | Conversion de NOx en N₂ |
|---|---|---|---|---|---|---|---|
| 1 | 0,44 | 0,54 | 1,2 | 0 | 0 | 112500 | 23%-265°C |
| 2 | 0,30 | 0,50 | 1,6 | 5,7 | 0 | 112500 | 18%-265°C |
| 3 | 0,40 | 0,50 | 1,2 | 0 | 0 | 112500 | 23%-245°C |
| 4 | 0,41 | 0,92 | 1,2 | 3,2 | 0 | 112500 | 21%-265°C |
| 5 | 0,37 | 0,34 | 0,9 | 0 | 0 | 112500 | 17%-300°C |
| 6 | 0,46 | 0,61 | 1,3 | 0 | 0 | 112500 | 28%-265°C |
| 7 | 0,29 | 1,26 | 4,2 | 0 | 0 | 112500 | 42%-265°C |
| 8 | 0,29 | 1,26 | 4,2 | 0 | 4 | 112500 | 35%-265°C |
| 9 | 0,29 | 1,26 | 4,2 | 0 | 0 | 67500 | 46%-265°C |
| 10* | 0,44 | 0,54 | 1,2 | 0 | 2 | 45000 | 36%-265°C |

| | | | | | | | |
|---|---|---|---|---|---|---|---|
| * pour l'essai 10 la conversion obtenue au temps t = 22 heures est la même que celle indiquée dans le tableau, ce qui montre la stabilité du catalyseur. | | | | | | | |

## Revendications

1. Procédé pour la préparation d'une composition catalytique pour le traitement d'un gaz à teneur élevée en oxygène en vue de la réduction de l'émission des oxydes d'azote, ladite composition comprenant une phase active sur un support, la phase active étant essentiellement à base de rhodium sous forme Rh^{x+} et d'au moins un autre élément choisi parmi le palladium et le platine, le support est à base d'oxyde de cérium et d'oxyde de zirconium, **caractérisé en ce que** le rhodium est déposé sur le support par échange anionique.

2. Procédé selon la revendication 1, **caractérisé en ce qu'**on soumet le support à un traitement thermique en présence d'un gaz réducteur après le dépôt du rhodium, puis on dépose au moins un élément choisi parmi le palladium et le platine.

3. Procédé selon la revendication 1, **caractérisé en ce que** le gaz réducteur est choisi parmi l'hydrogène, le monoxyde de carbone et leurs mélanges, le gaz réducteur étant éventuellement en mélange avec un gaz inerte.

4. Composition catalytique pour le traitement d'un gaz à teneur élevée en oxygène en vue de la réduction de l'émission des oxydes d'azote, **caractérisé en ce qu'**elle est obtenue par un procédé selon l'une des revendications 1 à 3, ladite composition comprenant une phase active sur un support, la phase active étant essentiellement à base de rhodium sous forme Rh^{x+} et d'au moins un autre élément choisi parmi le palladium et le platine, le support est à base d'oxyde de cérium et d'oxyde de zirconium.

5. Procédé de traitement d'un gaz à teneur élevée en oxygène en vue de la réduction de l'émission des oxydes d'azote, **caractérisé en ce qu'**il utilise une composition catalytique selon la revendication 4.

6. Procédé de traitement selon la revendication 5, **caractérisé en ce que** la composition catalytique contient au moins un élément choisi parmi Pd et Pt, le rapport atomique dudit élément à Rh étant d'au moins 1, plus particulièrement d'au moins 1,5.

7. Procédé de traitement selon l'une des revendication 5 ou 6, **caractérisé en ce que** l'élément Pd et/ou Pt est sous forme d'oxyde.

8. Procédé de traitement selon l'une des revendications 5 à 7, **caractérisé en ce que** le support de la composition catalytique est à base d'un mélange d'oxyde de cérium et d'oxyde de zirconium dans lequel le rapport massique de l'oxyde de cérium à l'oxyde de zirconium est compris entre 1/9 et 9/1.

9. Procédé de traitement selon l'une des revendications 5 à 8, mis en oeuvre pour le traitement d'un gaz d'échappement d'un moteur diesel ou de moteur fonctionnant en mélange pauvre.

10. Procédé de traitement selon l'une des revendications 5 à 9, mis en oeuvre pour le traitement d'un gaz dont la teneur en oxygène est d'au moins 5% en volume.

## Claims

1. Method for the manufacture of a catalytic composition for the treatment of a gas having a high oxygen content for the reduction of emission of nitrogen oxides, said composition comprising an active phase on a support, wherein the active phase is essentially based on rhodium in the form of Rh^{x+} and at least one other element chosen from among palladium and platinum, and in that the support is based on cerium oxide and zirconium oxide, **characterised in that** rhodium is deposited on the support by anion exchange.

2. Method according to claim 1, **characterised in that** the support is heat treated in the presence of a reducing gas after the deposit of rhodium, and one element chosen from among palladium and platinum is thereafter deposited.

3. Method according to claim 1, **characterised in that** the reducing gas is chosen from among hydrogen, carbon monoxide and mixtures thereof, the reducing gas possibly being mixed with an inert gas.

4. Catalytic composition for the treatment of a gas having a high oxygen content for the reduction of emission of nitrogen oxides, **characterised in that** it is obtained by a method according to one of claims 1 to 3, said composition comprising an active phase on a support, wherein the active phase is essentially based on rhodium in the form of Rh^{x+} and at least one other element chosen from among palladium and platinum, the support is based on cerium oxide and zirconium oxide.

5. Method for the treatment of a gas having a high oxygen content for the reduction of emission of nitrogen oxides, **characterised in that** a catalytic composition according to claim 4 is implemented.

6. Method for the treatment according to claim 5, **characterised in that** the catalytic composition comprises at least one element chosen from among Pd and Pt, the atomic ratio of the said element to rhodium is at least 1, more particularly at least 1.5.

7. Method for the treatment according to one of claims 5 or 6, **characterised in that** the element Pd and/or Pt is in the form of an oxide.

8. Method for the treatment according to one of claims 5 to 7, **characterised in that** the support of the catalytic composition is based on a mixture of cerium oxide and zirconium oxide in which the weight ratio of cerium oxide/zirconium oxide is comprised between 1/9 and 9/1.

9. Method for the treatment according to one of claims 5 to 8, implemented for the treatment of an exhaust gas of diesel engines or of engines operating with a lean mixture.

10. Method for the treatment according to one of claims 5 to 9, implemented for the treatment of a gas the oxygen content of which is at least 5% by volume.

## Patentansprüche

1. Verfahren zur Herstellung einer Katalysatorzusammensetzung zur Behandlung eines Gases mit erhöhtem Sauerstoffgehalt zur Reduktion der Stickoxidemission, wobei die Zusammensetzung eine aktive Phase auf einem Träger umfasst, wobei die aktive Phase im Wesentlichen auf Rhodium in der Form Rh^{x+} und zumindest einem anderen, aus Palladium und Platin ausgewählten Element basiert und der Träger auf Ceroxid und Zirkoniumoxid basiert, **dadurch gekennzeichnet, dass** das Rhodium durch Anionenaustausch auf dem Träger abgeschieden wird.

2. Verfahren nach Anspruch 1, **dadurch gekennzeichnet, dass** der Träger nach dem Abscheiden des Rhodiums einer Wärmebehandlung in Gegenwart eines reduzierenden Gases unterzogen wird, wonach zumindest ein aus Palladium und Platin ausgewähltes Element abgeschieden wird.

3. Verfahren nach Anspruch 1, **dadurch gekennzeichnet, dass** das reduzierende Gas aus Wasserstoff, Kohlenmonoxid und Gemischen davon ausgewählt ist und gegebenenfalls ein Gemisch mit einem Inertgas ist.

4. Katalysatorzusammensetzung zur Behandlung eines Gases mit erhöhtem Sauerstoffgehalt zur Reduktion der Stickoxidemission, **dadurch gekennzeichnet, dass** sie durch ein Verfahren nach einem der Ansprüche 1 bis 3 erhalten wird, wobei sie eine aktive Phase auf einem Träger umfasst, wobei die aktive Phase im Wesentlichen auf Rhodium in Form von Rh^{x+} und zumindest einem anderen, aus Palladium und Platin ausgewählten Element basiert, wobei der Träger auf Ceroxid und Zirkoniumoxid basiert.

5. Verfahren zur Behandlung eines Gases mit erhöhtem Sauerstoffgehalt zur Reduktion der Stickoxidemission, **dadurch gekennzeichnet, dass** eine Katalysatorzusammensetzung nach Anspruch 4 eingesetzt wird.

6. Behandlungsverfahren nach Anspruch 5, **dadurch gekennzeichnet, dass** die Katalysatorzusammensetzung zumindest ein aus Pd und Pt ausgewähltes Element umfasst, wobei das Atomverhältnis zwischen dem Element und Rh zumindest 1 und insbesondere zumindest 1,5 beträgt.

7. Behandlungsverfahren nach einem der Ansprüche 5 oder 6, **dadurch gekennzeichnet, dass** das Element Pd und/oder Pt in Oxidform vorliegen/vorliegt.

8. Behandlungsverfahren nach einem der Ansprüche 5 bis 7, **dadurch gekennzeichnet, dass** der Träger der Katalysatorzusammensetzung auf einem Gemisch aus Ceroxid und Zirkoniumoxid basiert, in dem das Gewichtsverhältnis zwischen Ceroxid und Zirkoniumoxid zwischen 1/9 und 9/1 liegt.

9. Behandlungsverfahren nach einem der Ansprüche 5 bis 8, das zur Behandlung eines Abgases eines Dieselmotors oder eines Motors, der mit einem mageren Gemisch betrieben wird, durchgeführt wird.

10. Behandlungsverfahren nach einem der Ansprüche 5 bis 9, das zur Behandlung eines Gases durchgeführt wird, dessen Sauerstoffgehalt mindestens 5 Vol.-% beträgt.
